Europäisches Patentamt

European Patent Office

Office européen des brevets

(11) Publication number: **0 106 192**
**A1**

# EUROPEAN PATENT APPLICATION

(21) Application number: **83109289.5**

(22) Date of filing: **19.09.83**

(51) Int. Cl.³: **G 02 B 5/16**

(30) Priority: **12.10.82 US 433631**

(43) Date of publication of application:
**25.04.84 Bulletin 84/17**

(84) Designated Contracting States:
**DE FR GB IT**

(71) Applicant: **LITTON SYSTEMS, INC.**
**1213 North Main Street**
**Blacksburg Virginia 24060(US)**

(72) Inventor: **Lewis, Norris Earl**
**805 Tower Road**
**Christiansburg Virginia 24073(US)**

(72) Inventor: **Miller, Michael B.**
**1140 Sherwood Drive**
**Christiansburg, Virginia 24073(US)**

(74) Representative: **Patentanwälte TER MEER - MÜLLER -**
**STEINMEISTER**
**Triftstrasse 4**
**D-8000 München 22(DE)**

(54) **Fiber optic polytwist.**

(57) An optical coupling device provides plural continuous, unbroken connections between two members (11, 13) relatively rotatable through a limited angular displacement. The coupling device is provided with two coaxial members that are rotatably interconnected for angular displacement, and between the members is provided an axially spaced array a series of isolated flexible optic fibers (16, 17) that are wrapped and unwrapped between the said members with rotative displacement between the members.

Fig_1

Croydon Printing Company Ltd.

# FIBER OPTIC POLYTWIST

## BACKGROUND OF THE INVENTION

Transmission of plural optical signals between relative rotatable members of a coupling does not lend itself to the same techniques used to transmit electrical signals through such a coupling, as for example, slip rings and other mechanical moving contacts.

Continuous optical connections which would work through the twisting or bending of a bundle of optical fibers for limited rotation of a coupling can result in mechanical fatigue and signal attenuation.

## SUMMARY AND OBJECT OF THE INVENTION

The invention relates to a limited rotation coupling comprised of a pair of rotatably interconnected members providing for a plurality of continuous optical fibers for transmitting uninterrupted optical signals.

It is therefore an object of this invention to provide a limited rotation fiber optic coupling.

It is a further object of this invention to provide for a relatively large number of separate optical fibers rotating through a comparatively large angle generated by the members of the coupling.

It is also an object of this invention to provide a fiber optic coupling which allows rotation through a limited angle at a very low torque.

It is further an object of this invention to provide a coupling which will be reliable and give long life without mechanical fatigue or failure.

## BRIEF DESCRIPTION OF THE DRAWINGS

Figure 1 is a side sectional view of a fiber optic rotary coupling according to the invention.

Figure 2 is an end sectional view taken along line 2-2 of Figure 1.

Figure 3 is an end sectional view of Figure 1 taken along line 3-3 of Figure 1 showing a typical optic fiber but wrapped opposite to the fiber depicted in Figure 2.

Figures 4 and 5 repeat the views of Figures 2 and 3, respectively, with the members rotated.

DESCRIPTION OF THE PREFERRED EMBODIMENT

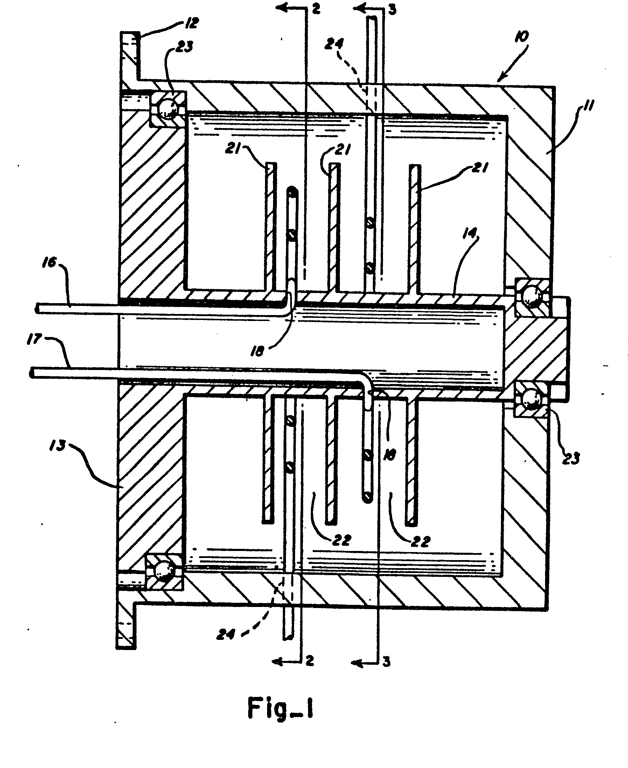

There is shown in Figure 1 a rotary coupling 10 which comprises a stator 11 with appropriate means 12 for attachment to a stationary structure, and a rotor 13. The rotor 13 comprises a hollow stem 14 through which the rotor ends of the optic fibers 16 and 17 pass and are supported at apertures 18 as they pass through the stem wall. The portions of the optic fibers 16 and 17 which are coiled around the rotor stem 14 are separated from one another by means of radial partitions 21 which create compartments 22. The isolation of the coiled portions greatly increases the service life and reliability of the rotary coupling by eliminating mechanical interference and abrasion of the optic fibers.

The stator 11 is mechanically interconnected to the rotor 13 through anti-friction bearings 23 and conventional means, not shown, are provided for limiting the rotation between the rotor 13 and the stator 11. Apertures 24 in the stator provide exits and support points for the stator ends of the optic fibers 16 and 17.

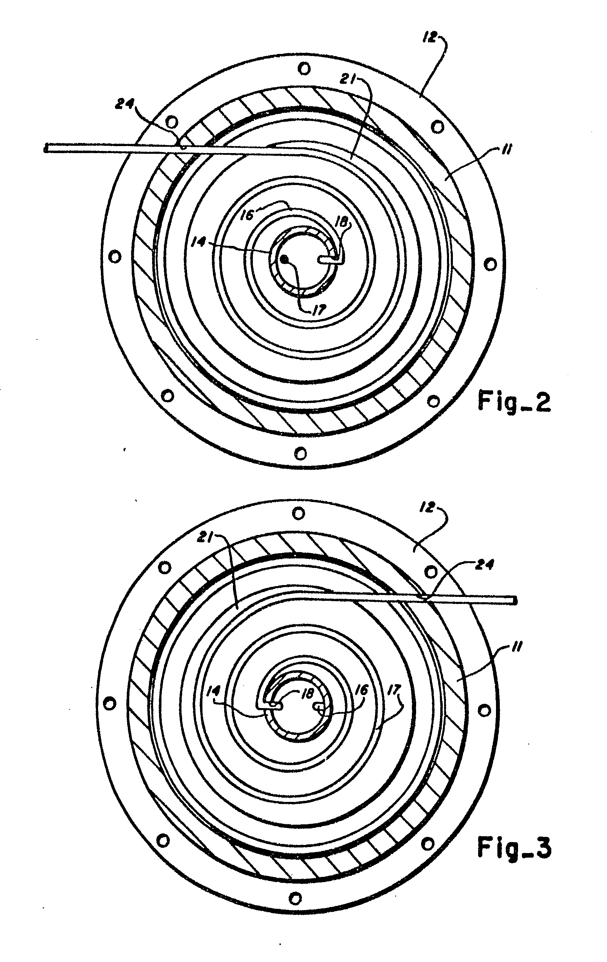

Figure 2 illustrates the loose spiral wrap of the optic fiber 16 around the rotor stem 14.

Figure 3 illustrates the same loose spiral wrap of the optic fiber 17 around the stem 14; however, Figure 3 depicts a wrap in a direction opposite of that represented in Figure 2.

According to the invention, there is provided an even number of spirally wrapped flexible optic fibers with alternate ones being wrapped in clockwise and counterclockwise directions to provide balancing spring torques to thus minimize the turning torque of the coupling. Those skilled in the art will recognize that when higher even numbers of flexible optic fibers are used, the unbalancing torque caused by one additional fiber is not appreciable, and therefore, the invention is intended to include such constructions.

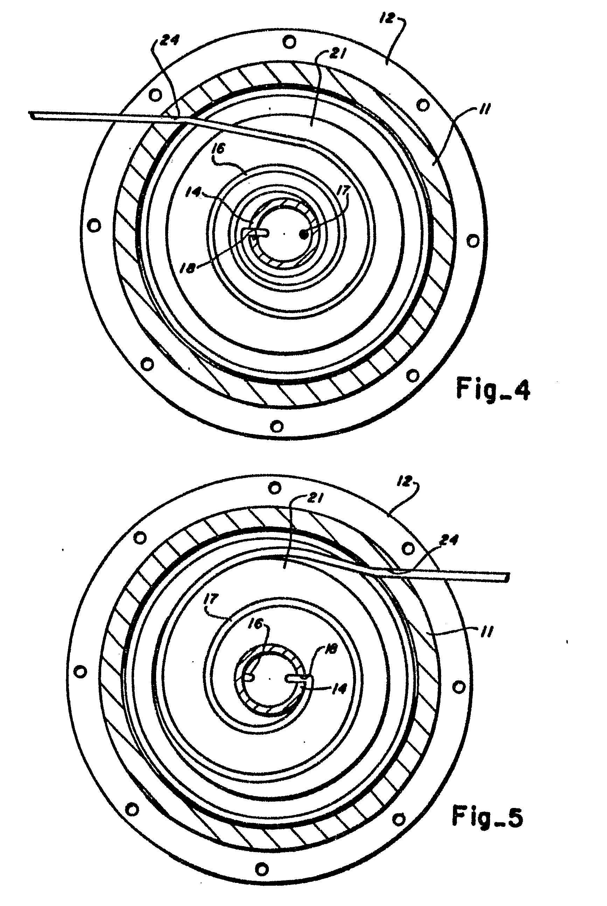

Figures 4 and 5 further serve to illustrate the torque balancing feature accomplished by reversing the direction of wrap of alternating optic fibers. Figure 4 shows the loose wrap condition of the optic fiber 16 illustrated in Figure 2 after the rotor 13 has rotated clockwise 180°. Likewise, Figure 5 illustrates the optic fiber 17 of Figure 3 after the rotor 13 has rotated clockwise 180°.

Having thus described the invention, various alterations and modifications thereof will occur to those skilled in the art, which alterations and modifications are intended to be within the scope of the invention as defined in the appended claims.

What is claimed is:

CLAIM    A limited rotation multiconductor rotary fiber optic coupler assembly comprises first and second (13, 11) rotatably interconnected members, characterized in that an even number of flexible optic fibers are wound in a loose spiral wrap about the first member, the optic fibers being supported at opposite ends by the first and second members and of sufficient length to allow limited rotation of the members, radial partition means (21) are spaced along the axis of the first member (13) to maintain axial separation of the fiber wraps, and half of the flexible optic fibers (16) are supported and wrapped to provide a torque in one direction and the other half (17) are supported and wrapped to provide an opposing torque.

0106192

Fig_1

Fig_2

Fig_3

Litton Systems, Inc.
Case: PS-60     3/3
0106192

Fig_4

Fig_5

## European Patent Office

## EUROPEAN SEARCH REPORT

# DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 599 165 (G. WENDELL et al.) <br> * Abstract; column 1, line 64 - column 2, line 71; figures 1-9 * | 1 | G 02 B 5/16 |
| A | DE-A-2 721 300 (LICENTIA PATENT-VERWALTUNGS-GmbH) <br> * Claim 1; figures 1,2 * | 1 | |
| A | FR-A- 703 931 (MAISON BREGUET) <br> * Page 1, lines 9-44; figures 1-3 * | 1 | |
| P,A | EP-A-0 071 875 (LITTON SYSTEMS INC.) <br> * Abstract; figures 1,2 * | 1 | |

TECHNICAL FIELDS
SEARCHED (Int. Cl. ³)

G 02 B 7/26
G 02 B 5/16
H 01 R 35/00
H 02 G 11/02

The present search report has been drawn up for all claims

| Place of search THE HAGUE | Date of completion of the search 17-01-1984 | Examiner BEAVEN G.L. |
|---|---|---|